# FASCICULE DE BREVET EUROPEEN

(11) **EP 2 632 003 B1**
(45) Date de publication et mention de la délivrance du brevet: **10.06.2020**
(21) Numéro de dépôt: 12305211.0
(22) Date de dépôt: 22.02.2012
(51) Int. Cl.: H02G 3/08, H02G 3/10

(54) **Appareil électrique à étanchéité renforcée**
Elektrogerät mit verstärkter Abdichtung
Electrical appliance with reinforced seal

(43) Date de publication de la demande: 28.08.2013
(73) Titulaire: Berker GmbH & Co. KG, 58579 Schalksmühle (DE)
(72) Inventeur: Gatto, Davide, 25017 Lonato Del Garda (BS) (IT); Conzadori, Remo, 25018 Montichiari (BS) (IT); Mollitor, Jens, 77652 Offenburg (DE)
(74) Mandataire: Nuss, Laurent

(56) Documents cités:
- EP-A2- 1 156 568
- DE-A1-102004 054 174
- DE-A1-102005 045 742
- US-A1- 2010 078 189

## Description

Le domaine de la présente invention est celui des équipements d'installations électriques pour le bâtiment, et l'invention a plus particulièrement pour objet, d'une part, un appareil électrique particulier, et, d'autre part, un procédé d'installation d'un tel appareil électrique.

Lorsqu'un appareil électrique, comprenant une boîte de montage pour l'installation en saillie sur une paroi, doit répondre à des normes d'étanchéité, il est nécessaire d'éviter que des gouttes d'eau, ou des particules solides, type poussière ou autre, ne viennent en contact avec les éléments électriques. Des normes classiques sont connues sous les noms IP44, IP55, ou encore IP66.

Il est donc nécessaire de traiter l'étanchéité arrière de la boîte de montage, c'est-à-dire l'étanchéité entre le mur et la boîte de montage. Il est ainsi nécessaire de garantir que de l'eau qui ruisselle contre le mur ne rentre pas dans la cavité d'accueil de la boîte de montage, où se trouve classiquement le bloc fonctionnel électrique. Cette étanchéité peut être réduite par des éléments traversant la paroi de fond de la boîte de montage.

Il est connu de l'art antérieur d'aménager des joints circulaires entourant chaque zone de passage d'un élément traversant la paroi de fond, du type vis ou câble. Un tel joint vient donc au contact tant de la boîte de montage que du mur, et entoure à distance l'élément traversant. Un tel joint a pour fonction d'éviter que de l'eau qui se trouve entre la boîte de montage et le mur ne vienne en contact de l'élément traversant, ce dernier pouvant alors conduire le liquide jusque dans la cavité dans laquelle se trouve le bloc fonctionnel électrique. Un appareil électrique de ce type est par exemple connu du document EP 1 156 568 A2.

Ce type de réalisation présente toutefois l'inconvénient suivant. Si le mur, ou son revêtement, présente des défauts de planéité, ou si le joint vient à vieillir, le contact du joint avec le mur peut être défectueux, et de l'eau peut se glisser entre le joint et le mur et aboutir finalement dans la zone où se trouve le bloc électrique. L'étanchéité n'est donc plus parfaite au niveau d'une zone de passage d'un élément traversant.

Le document DE 10 2005 045 742 A1 divulgue une boîte d'encastrement d'appareillage électrique. La boîte comprend un fond avec une face extérieure. La face extérieure est recouverte d'une couche en matériau plastique mou.

La présente invention a pour but de pallier au moins cet inconvénient et vise à proposer un appareil électrique dont l'étanchéité est garantie au niveau d'un élément traversant la paroi de la boîte de montage.

A cet effet, l'invention a pour objet un appareil électrique selon la revendication 1, destiné à être monté en saillie contre un mur, comprenant au moins un bloc fonctionnel électrique et une boîte de montage pour le montage au mur et la fixation dudit au moins un bloc fonctionnel, ladite boîte de montage présentant, d'un côté intérieur de ladite boîte de montage par rapport à une paroi de fond, une cavité d'accueil pour ledit au moins un bloc fonctionnel, délimitée par ladite paroi de fond. Cet appareil électrique est caractérisé en ce que la boîte de montage présente, au niveau de la paroi de fond et pour le passage à travers cette dernière d'un élément traversant du type câble ou vis, au moins une zone de passage, notamment sous la forme d'un orifice débouchant aménagé dans ladite paroi de fond et/ou d'un aménagement de zones de fragilité facilitant la création d'un tel orifice par séparation d'une portion détachable,

l'appareil électrique comprenant, en outre, au moins un joint placé contre la paroi de fond d'un côté extérieur de la boîte de montage, opposé au côté intérieur, autour de la au moins une zone de passage et apte à épouser la section de l'élément traversant, de sorte à contribuer à l'étanchéité de la zone de passage.

L'invention a aussi pour objet un procédé selon la revendication 11 de montage d'un tel appareil électrique, comprenant une étape consistant à positionner l'appareil électrique sur un mur, ainsi qu'une étape consistant à introduire un élément traversant, du type vis ou câble, à travers une zone de passage jusque dans ledit mur de sorte à fixer l'appareil électrique audit mur. Ce procédé est caractérisé en ce qu'il comprend une étape consistant à découper au moins un joint au niveau d'une zone de passage, notamment avant de positionner l'appareil électrique, de sorte à réaliser dans le joint sans enlèvement de matière une discontinuité de passage, telle qu'une simple fente ou telle qu'un orifice de dimensions inférieures à un élément traversant à faire passer par ladite zone de passage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

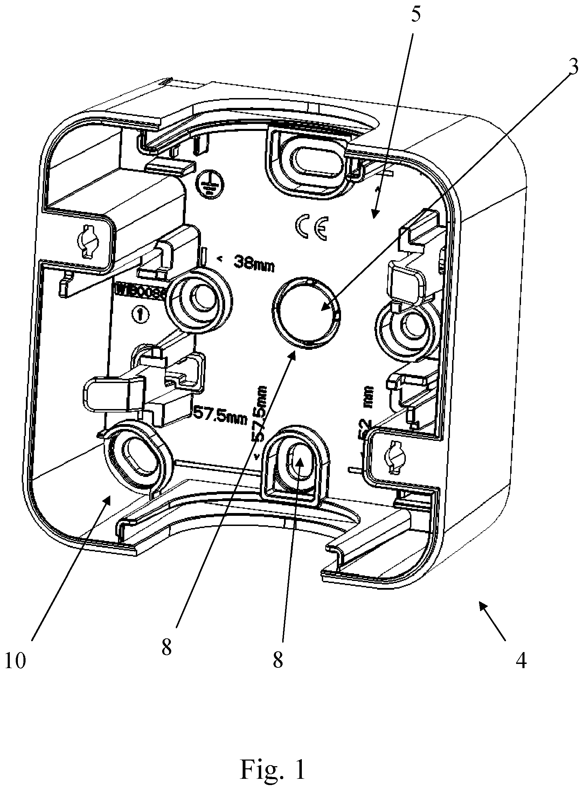

- la figure 1 illustre une boîte de montage, et sa cavité d'accueil du bloc fonctionnel électrique ;

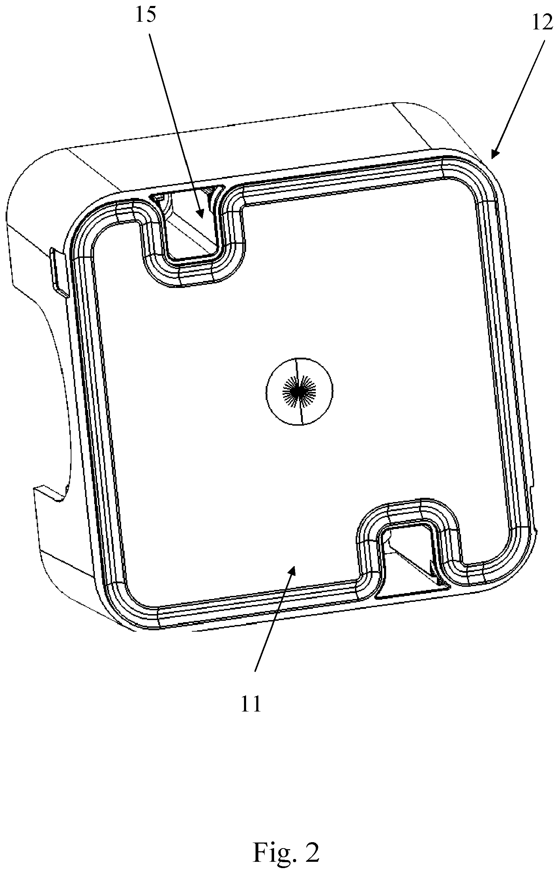

- la figure 2 illustre la partie arrière de la boîte de montage munie d'un joint ;

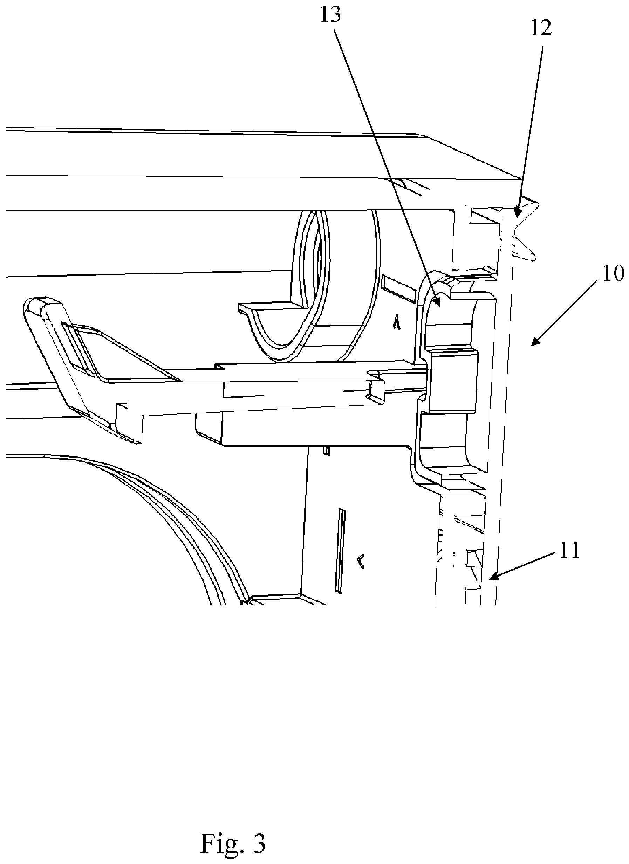

- la figure 3 montre un détail du joint, traversant localement la paroi de fond ;

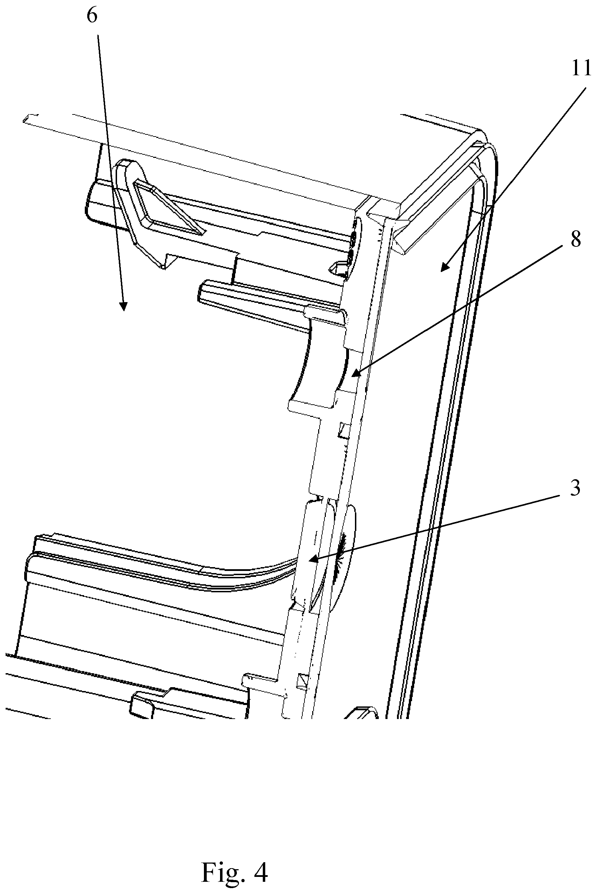

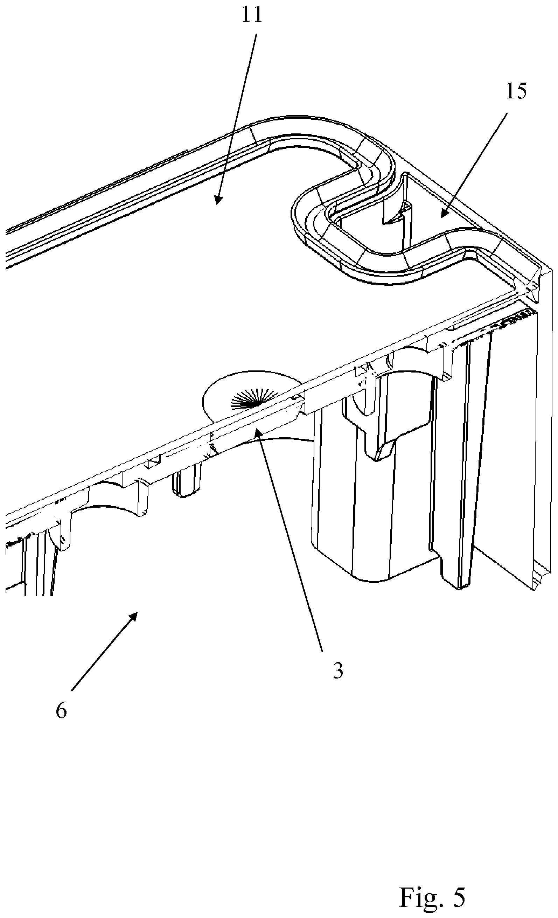

- les figures 4 et 5 sont des sections de la boîte de montage d'un appareil selon l'invention ;

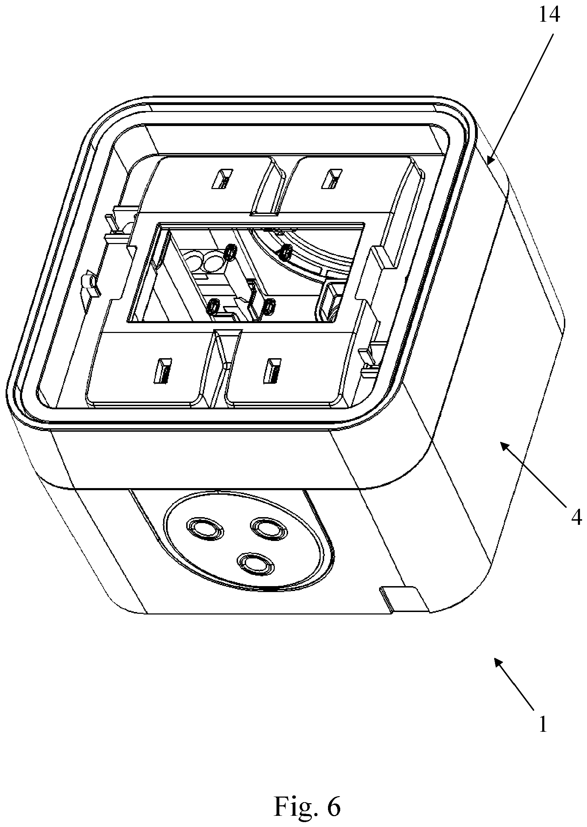

- la figure 6 illustre un appareil électrique selon l'invention, où la manette d'interrupteur est cependant ôtée ;
- la figure 7 illustre la face arrière de la boîte de montage, sans le joint, et

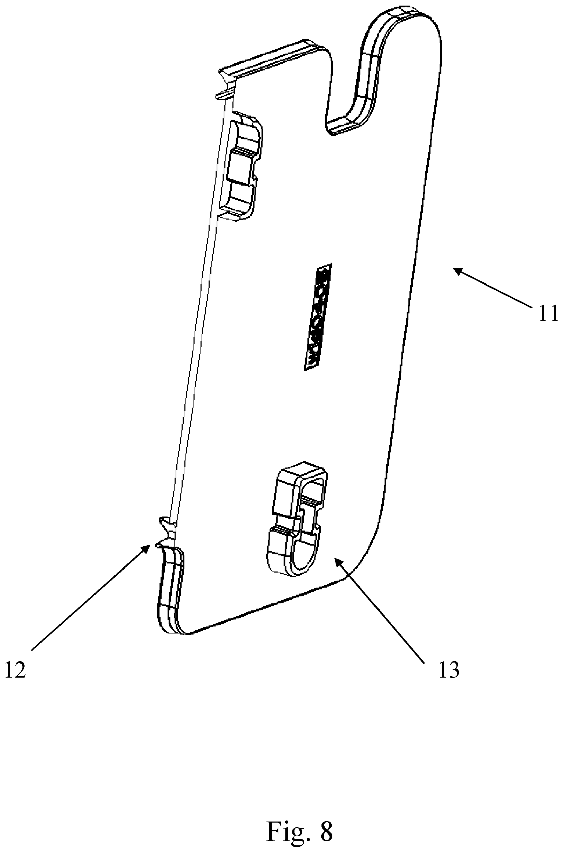

- la figure 8 représente une coupe d'un joint destiné à recouvrir toute la face arrière de la boîte de montage.

L'invention a donc tout d'abord pour objet un appareil électrique 1, destiné à être monté en saillie contre un mur, comprenant au moins un bloc fonctionnel électrique et une boîte de montage 4 pour le montage au mur et la fixation dudit au moins un bloc fonctionnel, ladite boîte de montage 4 présentant, d'un côté intérieur de ladite boîte de montage 4 par rapport à une paroi de fond 5, une cavité d'accueil 6 pour ledit au moins un bloc fonctionnel, délimitée par ladite paroi de fond 5. L'appareil électrique 1 peut être notamment du type interrupteur et/ou socle de connexion pour fiche électrique.

Comme il sera décrit plus loin, l'appareil électrique 1 peut être monoposte, et être donc muni d'un unique bloc fonctionnel, ou multiposte, et donc être muni d'une pluralité de blocs fonctionnels, éventuellement différents. La boîte de montage 4 est classiquement réalisée par moulage de matière plastique, la cavité d'accueil 6 étant délimitée par la paroi de fond 5 et des parois latérales. Le au moins un bloc fonctionnel est, dans le mode de réalisation illustré, fixé à la boîte de montage 4, dans la cavité d'accueil 6, par encliquetage avec des pattes élastiques dédiées à cette fixation.

Un tel appareil électrique 1 doit garantir l'étanchéité de la cavité d'accueil 6, afin d'éviter tout risque électrique lié au bloc fonctionnel. Comme il sera encore décrit plus loin, il est donc muni d'au moins un joint 11, destiné à venir entre la paroi de fond 5 et le mur. La boîte de montage 4 doit être traversée, notamment au niveau de sa paroi de fond 5, au moins par des câbles de connexion à l'au moins un bloc fonctionnel, qu'il s'agisse de la connexion à un réseau électrique de puissance ou à réseau de communication, et éventuellement aussi par des vis de fixation de la boîte de montage 4 au mur. De façon générale, la boîte de montage 4 présente donc, une fois qu'elle est mise en place, différents éléments traversant qui traversent sa paroi constitutive, notamment sa paroi de fond 5.

Selon l'invention, la boîte de montage 4 présente, au niveau de la paroi de fond 5 et pour le passage à travers cette dernière d'un élément traversant du type câble ou vis, au moins une zone de passage 8, notamment sous la forme d'un orifice débouchant 10 aménagé dans ladite paroi de fond 5 et/ou d'un aménagement de zones de fragilité facilitant la création d'un tel orifice par séparation d'une portion détachable 3,

l'appareil électrique 1 comprenant, en outre, au moins un joint 11 placé contre la paroi de fond 5 d'un côté extérieur de la boîte de montage 4, opposé au côté intérieur, autour de la au moins une zone de passage 8 et apte à épouser la section de l'élément traversant, de sorte à contribuer à l'étanchéité de la zone de passage 8.

La zone de passage 8 est donc prévue dans la boîte de montage 4 lors sa fabrication, et peut aisément correspondre aux emplacements classiquement prévus pour la connexion électrique ou la fixation mécanique. Le au moins un joint 11 est placé à l'arrière de la paroi de fond 5, et vient donc s'interposer entre le mur et la paroi de fond 5 une fois l'appareil électrique 1 installé. Il recouvre complètement la zone de passage 8 et forme donc un opercule, éventuellement traversé par l'élément traversant une fois celui-ci mis en place, empêchant la circulation d'eau ou de poussière à travers la zone de passage 8. Avant la mise en place de l'appareil électrique 1 et en particulier avant qu'un élément traversant ne soit installé dans la zone de passage 8 celle-ci est donc entièrement scellée par le au moins un joint 11.

Lorsqu'un élément traversant est inséré à travers la zone de passage 8, le joint 11 vient entourer complètement l'élément traversant, en épousant sa forme extérieure sur une partie de sa longueur. Le au moins un joint 11 vient donc au contact de l'élément traversant et scelle donc complètement l'éventuel passage entre un élément traversant plus petit que la zone de passage 8 qu'il traverse. Le joint 11 possède donc une élasticité qui lui permet, sans enlèvement de matière, d'accueillir l'élément traversant dès lors qu'au moins une coupure a été pratiquée dans le joint 11. L'avantage d'un tel joint 11, qui garantit l'étanchéité de la zone de passage 8 traversée par un élément traversant en recouvrant totalement la zone qui les sépare, est une bien meilleure étanchéité puisque cette dernière est assurée par contact avec l'élément traversant.

Ainsi, de l'eau qui se trouverait sur l'élément traversant serait donc stoppée par le joint 11 qui épouse le contour extérieur de l'élément traversant.

Selon une caractéristique supplémentaire possible, contribuant à améliorer encore l'étanchéité, le au moins un joint 11 prend la forme d'une membrane continue recouvrant entièrement ladite au moins une zone de passage 8, positionnée contre la paroi de fond 5 d'un côté extérieur de la boîte de montage 4 opposé au côté intérieur, ledit joint 11 étant fixé à la paroi de fond 5 au moins le long d'un contour fermé entourant la au moins une zone de passage 8. Le joint 11 est donc fixé tout autour de la zone de passage 8 le long d'un contour fermé, tel qu'un cercle par exemple, et ce de façon hermétique, empêchant ainsi l'accès à des liquides ou des petites particules solides. Il peut être fixé par collage, soudure ou par surmoulage.

Le joint 11 forme donc un opercule qui recouvre la zone de passage 8, et qui peut venir au contact le long de toute la périphérie de l'élément traversant lorsque celui-ci est inséré.

Cela contribue, une fois l'élément traversant installé à travers la zone de passage 8, à l'étanchéité de la zone de passage 8 et évite ainsi qu'un liquide ne pénètre la cavité d'accueil 6, notamment grâce au fait que le joint 11 peut réaliser une parfaite étanchéité de la zone de passage 8, même pour un élément traversant de plus petite dimension que celles de la zone de passage 8 dans laquelle il est introduit.

Dans l'art antérieur, il était courant d'aménager un joint autour de la zone de passage 8, destiné à venir au contact du mur, et de garantir ainsi une étanchéité entre la zone de passage 8 et le mur. Une matière traversant un tel joint pouvait alors directement accéder à la cavité d'accueil 6 grâce à l'espace de la zone de passage 8 laissé libre par l'élément traversant. Dans l'invention, le joint 11 garantit, au niveau de la zone de passage 8, une étanchéité directement entre la zone de passage 8 et l'élément traversant.

La perforation du joint 11, nécessaire pour le passage de l'élément traversant, est réalisée à l'occasion de la mise en place de l'appareil électrique 1, préférentiellement en réalisant une perforation ou découpe sans aucun enlèvement de matière, ce qui a pour effet, lorsque ledit élément traversant est passé à travers la zone de passage 8 à partir de la cavité d'accueil 6, que le joint 11 se comporte comme un joint à lèvre pour ledit élément traversant et arrive au contact de l'élément traversant. En outre, ne réaliser qu'une simple découpe dans le joint 11, sans enlèvement de matière, permet au joint 11, après un éventuel retrait ultérieur complet de l'élément traversant, de reprendre une forme qui recouvre à nouveau complètement la zone de passage 8 et donc de continuer à garantir l'étanchéité.

Le joint 11 est donc suffisamment élastique pour recouvrir entièrement la zone de passage 8 à l'état non déformé, même après éventuelle découpe sans enlèvement de matière, et pour se déformer et laisser passer l'élément traversant.

Selon une caractéristique additionnelle possible, le au moins un joint 11 présente, le long de son pourtour extérieur et du côté opposé à la cavité d'accueil 6, une nervure 12 continue, formant au moins une lèvre et préférentiellement une double lèvre, notamment une nervure 12 dont la section est un V s'évasant en s'éloignant de la cavité d'accueil 6 depuis la paroi de fond 5, ce qui contribue à l'étanchéité en évitant que du liquide ne s'introduise entre le mur et le joint 11 jusqu'à une découpe pratiquée dans le joint 11 et destinée au passage de l'élément traversant. En outre, cette nervure 12 permet de compenser les irrégularités du mur, puisqu'elle peut plus ou moins s'écraser pour épouser les creux et bosses.

Il est classique que la boîte de montage 4 présente une pluralité de zones passages 8, pour les différents éléments devant traverser la paroi constitutive de la boîte de montage 4, à savoir vis et câbles divers. Il est donc possible d'aménager un joint 11 pour chaque zone de passage 8. La boîte de montage 4 apparaissant alors avant mise en place comme munie d'autant d'opercules, que forment les différents joints 11, que de zones de passages 8. Toutefois, selon une caractéristique avantageuse possible, permettant notamment d'offrir un fond plat à l'appareil électrique 1 et aussi de garantir que l'éventuelle nervure 12 soit en contact avec le mur sur tout son contour, l'appareil électrique 1 présente une pluralité de zones de passages 8 et comprend un seul joint 11 recouvrant entièrement chaque zone de passage 8, apte à épouser la section de tout élément traversant introduit à travers la zone de passage 8, positionné contre la paroi de fond 5 du côté extérieur de la boîte de montage 4, ledit joint 11 étant fixé à la paroi de fond 5 au moins au niveau de chaque zone de passage 8, au moins le long d'un contour fermé entourant cette dernière.

Un tel joint 11 consiste donc essentiellement en une pièce unique qui forme les différents joints recouvrant les zones de passage 8. Un seul joint 11 est donc prévu, plutôt qu'autant de joints 11 que de zones de passages 8.

Dans certains modes de réalisation, l'appareil électrique 1 présente un couvercle 14, fixé à la boîte de montage 4 par au moins un élément de fixation, du type vis. Cet élément de fixation peut, pour son extrémité du côté du couvercle 14, être dans une zone non étanche. Afin d'éviter que le passage de cet élément fixation ne permette le passage de liquide ou de particules jusque dans la cavité d'accueil 6, il est pertinent d'envisager que ledit élément de fixation débouche dans une cavité secondaire 15 qui ne communique pas avec la cavité d'accueil 6. Ainsi, de l'eau qui arrive éventuellement dans la cavité secondaire 15 par l'élément de fixation ou les trous aménagés pour lui, ne présente aucun risque pour le bloc fonctionnel.

Ainsi, selon une caractéristique additionnelle possible, qui évite que de l'eau, arrivée dans la cavité secondaire 15, ne s'infiltre entre le au moins un joint 11 et la boîte de montage 4, ce qui nuirait à l'étanchéité, la boîte de montage 4 présente au moins une cavité secondaire 15 dans laquelle débouche un élément de fixation d'un couvercle 14 destiné à fermer la boîte de montage 4, le joint 11 ne couvrant pas une embouchure de ladite cavité secondaire 15 au niveau de la paroi de fond 5. Compte tenu de l'éventuelle présence d'eau dans la cavité secondaire 15, il n'est pas pertinent de traiter son embouchure au niveau de la paroi de fond 5 comme une zone de passage 8 et de complètement la couvrir en fixant un joint 11 de façon hermétique autour d'elle.

Selon une caractéristique additionnelle possible et comme le montrent les figures, la paroi de fond 5 présente, du côté extérieur, une gorge périphérique 7 s'étendant selon un contour fermé.

Selon une autre caractéristique additionnelle possible, le au moins un joint 11 recouvre sensiblement toute la paroi de fond 5, ce qui évite que de l'eau s'infiltre, voire stagne, entre la boîte de montage 4 et le mur, ce qui augmenterait le risque d'entrée d'eau dans la cavité d'accueil 6. Cela permet, en outre, de garantir que la nervure 12 périphérique soit au contact du mur sur tout son contour, évitant ainsi les éventuels jours préjudiciables à l'étanchéité.

Selon une caractéristique additionnelle possible, le au moins un joint 11 est une pièce rapportée contre la boîte de montage 4, notamment fixée par soudure ou collage, ce qui simplifie considérablement la fabrication de l'appareil électrique 1, et permet notamment de l'ajouter sur une boîte de montage 4 classique, non destinée à satisfaire des contraintes d'étanchéité.

Selon une caractéristique additionnelle possible, qui permet de positionner le joint 11 lors d'une opération de fixation du joint 11 à la boîte de montage 4 le cas échéant, comme, par exemple, par thermosoudure ou collage, la boîte de montage 4 présente au moins une zone de passage 8 sous la forme d'un orifice débouchant 10, le au moins un joint 11 présentant un flanc 13 s'étendant dans ledit orifice débouchant 10 contre le bord intérieur de ce dernier. Cet orifice débouchant 10 n'est pas destiné à être par la suite traversé par un élément traversant. Par conséquent, le joint 11 peut être plus épais à cet endroit, puisqu'il n'est pas nécessaire qu'il présente la même flexibilité que pour un joint 11 au niveau d'un zone de passage 8 traversée par un élément traversant lui permettant, sans enlèvement de matière, d'épouser la forme d'un élément traversant introduit dans une zone de passage 8.

Selon une caractéristique additionnelle possible, permettant de créer facilement un orifice débouchant 10, l'appareil électrique 1 présente au moins une zone de passage 8 sous la forme d'une portion détachable 3 à laquelle le au moins un joint 11 n'est pas fixé, notamment une portion détachable 3 positionnée au centre de la paroi de fond 5. Ainsi, la portion détachable 3 peut être aisément, d'une part, séparée de la paroi de fond 5, et, d'autre part, séparée du joint 11.

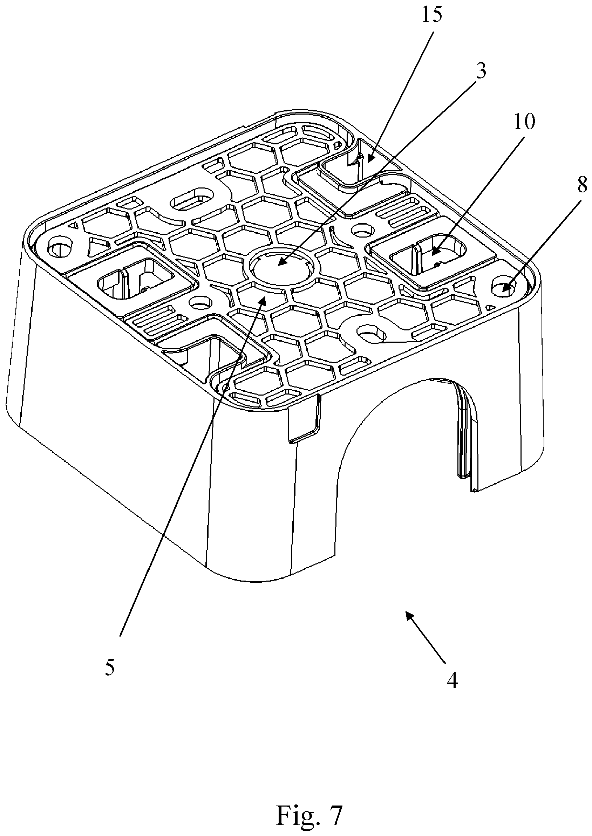

Selon une caractéristique additionnelle possible, la fixation du au moins un joint 11 sur la boîte de montage 4 est répartie sur sensiblement toute la surface de ce dernier, notamment par un collage de sensiblement toute la surface ou par soudure le long d'un motif réparti sur toute ladite surface. Cela ne signifie pas forcément que toute la surface du joint 11 est fixée, mais que cette fixation est répartie sur toute la surface, par exemple en s'étendant d'un bord à l'autre du joint 11, plutôt qu'une fixation ponctuelle. Bien entendu, dans le cas où la boîte de montage 4 présente une cavité secondaire 15 débouchant au niveau de la paroi de fond 5, le joint 11 peut être fixé uniquement au reste de la paroi de fond 5. La figure 7 montre par exemple que la paroi de fond 5 de la boîte de montage 4 présente une nervure sous la forme d'un motif s'étendant sur sensiblement toute la surface de la paroi de fond. Cette nervure représente la surface de fixation du joint 11. Cette nervure peut aussi être aménagée sur le joint 11 lui-même.

L'invention a aussi pour objet un procédé de mise en place d'un appareil électrique 1 tel que décrit plus haut, comprenant une étape consistant à positionner l'appareil électrique 1 sur un mur, ainsi qu'une étape consistant à introduire un élément traversant, du type vis ou câble, à travers une zone de passage 8 jusque dans ledit mur de sorte à fixer l'appareil électrique 1 audit mur.

Selon l'invention, ce procédé de mise en place comprend une étape consistant à découper au moins un joint 11 au niveau d'une zone de passage 8, notamment avant de positionner l'appareil électrique 1, de sorte à réaliser dans le joint 11 sans enlèvement de matière une discontinuité de passage, telle qu'une simple fente ou telle qu'un orifice de dimensions inférieures à un élément traversant à faire passer par ladite zone de passage 8. Préférentiellement, la découpe se fait sans enlèvement de matière, et revient donc simplement à réaliser, dans le joint 11, une discontinuité qui débouche des deux côtés dudit joint 11. Compte tenu de l'élasticité du joint 11 au niveau de la zone de passage 8, il n'est pas nécessaire d'ôter de la matière pour permettre le passage de l'élément traversant. En outre, comme il a déjà été décrit plus haut, faire passer l'élément traversant à travers le joint 11 sans enlèvement de matière garantit que le joint 11 épouse bien la forme extérieur dudit élément traversant, mais aussi que, si l'élément traversant est retiré, le joint 11 peut simplement retrouver une forme qui continue à offrir une bonne étanchéité de la zone de passage 8, puisqu'il n'y a eu aucun enlèvement de matière créant un passage pour de l'eau ou des particules.

Selon une caractéristique additionnelle possible, découper le au moins un joint 11 est réalisé par l'élément traversant lors de l'étape d'introduction. Cela est particulièrement envisageable si l'élément traversant est une vis, qui présente un filet tranchant qui peut couper le joint 11, ou un câble, dont la section de la portion métallique est suffisamment faible pour percer le joint 11.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Appareil électrique (1), destiné à être monté en saillie contre un mur, comprenant au moins un bloc fonctionnel électrique et une boîte de montage (4) pour le montage au mur et la fixation dudit au moins un bloc fonctionnel, ladite boîte de montage (4) présentant, d'un côté intérieur de ladite boîte de montage (4) par rapport à une paroi de fond (5), une cavité d'accueil (6) pour ledit au moins un bloc fonctionnel, délimitée par ladite paroi de fond (5),
la boîte de montage (4) présentant, au niveau de la paroi de fond (5) et pour le passage à travers cette dernière d'un élément traversant du type câble ou vis, une pluralité de zones de passage (8), notamment sous la forme d'un orifice débouchant (10) aménagé dans ladite paroi de fond (5) et/ou d'un aménagement de zones de fragilité facilitant la création d'un tel orifice par séparation d'une portion détachable (3),
**caractérisé en ce que** l'appareil électrique (1) comprend, en outre, un seul joint (11) recouvrant entièrement chaque zone de passage (8), placé contre la paroi de fond (5) d'un côté extérieur de la boîte de montage (4), opposé au côté intérieur, autour de la au moins une zone de passage (8), fixé à la paroi de fond (5) au moins au niveau de chaque zone de passage (8) et apte à épouser la section de tout élément traversant introduit à travers la zone de passage (8), de sorte à contribuer à l'étanchéité de la zone de passage (8),
**en ce que** ledit joint (11) est fixé à la paroi de fond (5) au moins au niveau de chaque zone de passage (8), au moins le long d'un contour fermé entourant cette dernière,
**en ce que** ledit joint (11) recouvre sensiblement toute la paroi de fond (5),
et **en ce que** ledit joint (11) présente, le long de son pourtour extérieur et du côté opposé à la cavité d'accueil (6), une nervure (12) continue, formant au moins une lèvre.

2. Appareil électrique (1) selon la revendication 1, **caractérisé en ce que** le joint (11) prend la forme d'une membrane continue recouvrant entièrement ladite au moins une zone de passage (8), positionnée contre la paroi de fond (5) d'un côté extérieur de la boîte de montage (4) opposé au côté intérieur, ledit joint (11) étant fixé à la paroi de fond (5) au moins le long d'un contour fermé entourant la au moins une zone de passage (8).

3. Appareil électrique (1) selon l'une quelconque des revendications 1 ou 2, **caractérisé en ce que** la nervure (12) continue forme une double lèvre.

4. Appareil électrique (1) selon l'une quelconque des revendications 1 à 3, **caractérisé en ce que** la nervure (12) est une nervure (12) dont la section est un V s'évasant en s'éloignant de la cavité d'accueil (6) depuis la paroi de fond (5).

5. Appareil électrique (1) selon l'une quelconque des revendications 1 à 4, **caractérisé en ce que** la boîte de montage (4) présente au moins une cavité secondaire (15) dans laquelle débouche un élément de fixation d'un couvercle (14) destiné à fermer la boîte de montage (4), le joint (11) ne couvrant pas une embouchure de ladite cavité secondaire (15) au niveau de la paroi de fond (5).

6. Appareil électrique (1) selon l'une quelconque des revendications 1 à 5, **caractérisé en ce que** la paroi de fond (5) présente, du côté extérieur, une gorge périphérique (7) s'étendant selon un contour fermé.

7. Appareil électrique (1) selon l'une quelconque des revendications 1 à 6, **caractérisé en ce que** ledit joint (11) est une pièce rapportée contre la boîte de montage (4), notamment fixée par soudure ou collage.

8. Appareil électrique (1) selon l'une quelconque des revendications 1 à 7, **caractérisé en ce que** la boîte de montage (4) présente au moins une zone de passage (8) sous la forme d'un orifice débouchant (10), ledit joint (11) présentant un flanc (13) s'étendant dans ledit orifice débouchant (10) contre le bord intérieur de ce dernier.

9. Appareil électrique (1) selon l'une quelconque des revendications 1 à 8, **caractérisé en ce qu'**il présente au moins une zone de passage (8) sous la forme d'une portion détachable (3) à laquelle ledit joint (11) n'est pas fixé.

10. Appareil électrique (1) selon l'une quelconque des revendications 1 à 9, **caractérisé en ce que** la fixation du joint (11) sur la boîte de montage (4) est répartie sur sensiblement toute la surface de ce dernier, notamment par un collage de sensiblement toute la surface ou par soudure le long d'un motif réparti sur toute ladite surface.

11. Procédé de mise en place d'un appareil électrique (1) suivant l'une quelconque des revendications 1 à 10, comprenant une étape consistant à positionner l'appareil électrique (1) sur un mur, ainsi qu'une étape consistant à introduire un élément traversant, du type vis ou câble, à travers une zone de passage (8) jusque dans ledit mur de sorte à fixer l'appareil électrique (1) audit mur,
procédé **caractérisé en ce qu'**il comprend une étape consistant à découper ledit joint (11) au niveau d'une zone de passage (8), notamment avant de positionner l'appareil électrique (1), de sorte à réaliser dans le joint (11) sans enlèvement de matière une discontinuité de passage, telle qu'une simple fente ou telle qu'un orifice de dimensions inférieures à un élément traversant à faire passer par ladite zone de passage (8).

12. Procédé selon la revendication 11, **caractérisé en ce que** découper ledit joint (11) est réalisé par l'élément traversant lors de l'étape d'introduction.

## Patentansprüche

1. Elektrischer Apparat (1), zur Aufputzmontage an einer Wand bestimmt, mindestens einen elektrischen Funktionsblock und eine Montagedose (4) zur Wandmontage und Befestigung des genannten mindestens einen elektrischen Funktionsblockes umfassend, wobei die genannte Montagedose (4) auf einer Innenseite der genannten Montagedose (4) gegenüber einer Bodenwand (5) einen Aufnahmehohlraum (6) für den genannten mindestens einen elektrischen Funktionsblock aufweist, der von der genannten Bodenwand (5) begrenzt wird,
wobei die genannte Montagedose (4) auf dem Niveau der Bodenwand (5) und für den Durchtritt eines durchquerenden Elementes der Art eines Kabels oder einer Schraube durch diese letztere mehrere Durchtrittsbereiche (8) aufweist, insbesondere in Form einer ausmündenden Öffnung (10), die in der genannten Bodenwand (5) ausgebildet ist, und/oder einer Ausbildung von Sollbruchbereichen, die die Schaffung einer derartigen Öffnung durch Abtrennung eines lösbaren Bereiches (3) erleichtern, **dadurch gekennzeichnet, dass** der elektrische Apparat (1) außerdem eine einzige Dichtung (11) aufweist, die vollständig jeden Durchtrittsbereich (8) bedeckt, auf einer der Innenseite gegenüberliegenden Außenseite der Montagedose (4) an der Bodenwand (5) um den mindestens einen Durchtrittsbereich (8) angeordnet ist, mindestens auf dem Niveau jeden Durchtrittsbereiches (8) an der Bodenwand (5) befestigt ist und geeignet ist, sich dem Querschnitt jeglichen durchquerenden Elementes anzulegen, das durch den Durchtrittsbereich (8) eingeführt wird, derart, dass sie zur Abdichtung des Durchtrittsbereiches (8) beiträgt,
dadurch, dass die genannte Dichtung (11) an der Bodenwand (5) mindestens auf dem Niveau jeden Durchtrittsbereiches (8), mindestens über eine geschlossene Umfangslinie, die diesen umgibt, befestigt ist,
dadurch, dass die genannte Dichtung (11) im Wesentlichen die gesamte Bodenwand (5) bedeckt,
und dadurch, dass die genannte Dichtung (11) längs ihrer äußeren Umfangslinie und auf der dem Aufnahmehohlraum (6) entgegengesetzten Seite eine kontinuierliche Rippe (12) aufweist, die mindestens eine Lippe bildet.

2. Elektrischer Apparat (1) nach Patentanspruch 1, **dadurch gekennzeichnet, dass** die Dichtung (11) die Form einer kontinuierlichen Membran hat, die den genannten mindestens einen Durchtrittsbereich (8) vollständig bedeckt, auf einer der Innenseite gegenüberliegenden Außenseite der Montagedose (4) an der Bodenwand (5) angeordnet ist, wobei die genannte Dichtung (11) an der Bodenwand (5) mindestens entlang einer geschlossenen Umfangslinie, die den mindestens einen Durchtrittsbereich (8) umgibt, befestigt ist.

3. Elektrischer Apparat (1) nach irgendeinem der Patentansprüche 1 oder 2, **dadurch gekennzeichnet, dass** die kontinuierliche Rippe (12) eine Doppellippe bildet.

4. Elektrischer Apparat (1) nach irgendeinem der Patentansprüche 1 bis 3, **dadurch gekennzeichnet, dass** die Rippe (12) eine Rippe (12) ist, deren Querschnitt die Form eines V hat, das sich von der Bodenwand (5) aus mit der Entfernung vom Aufnahmehohlraum (6) zunehmend erweitert.

5. Elektrischer Apparat (1) nach irgendeinem der Patentansprüche 1 bis 4, **dadurch gekennzeichnet, dass** die Montagedose (4) mindestens einen Nebenhohlraum (15) aufweist, in den ein Befestigungsmittel eines Deckels (14), dazu bestimmt, die Montagedose (4) zu verschließen, mündet, wobei die Dichtung (11) eine Mündung des genannten Nebenhohlraumes (15) auf dem Niveau der Bodenwand (5) nicht bedeckt.

6. Elektrischer Apparat (1) nach irgendeinem der Patentansprüche 1 bis 5, **dadurch gekennzeichnet, dass** die Bodenwand (5) auf der Außenseite eine periphere Rille (7) aufweist, die sich über eine geschlossene Umfangslinie erstreckt.

7. Elektrischer Apparat (1) nach irgendeinem der Patentansprüche 1 bis 6, **dadurch gekennzeichnet, dass** die genannte Dichtung (11) ein an die Montagedose (4) angesetztes Teil ist, das insbesondere durch Schweißung oder Klebung befestigt ist.

8. Elektrischer Apparat (1) nach irgendeinem der Patentansprüche 1 bis 7, **dadurch gekennzeichnet, dass** die Montagedose (4) mindestens einen Durchtrittsbereich (8) in Form einer ausmündenden Öffnung (10) aufweist, wobei die genannte Dichtung (11) eine Flanke (13) aufweist, die sich in die genannte ausmündende Öffnung (10), am Innenrand dieser letzteren entlang, erstreckt.

9. Elektrischer Apparat (1) nach irgendeinem der Patentansprüche 1 bis 8, **dadurch gekennzeichnet, dass** er mindestens einen Durchtrittsbereich (8) in Form eines lösbaren Teiles (3) aufweist, an dem die genannte Dichtung (11) nicht befestigt ist.

10. Elektrischer Apparat (1) nach irgendeinem der Patentansprüche 1 bis 9, **dadurch gekennzeichnet, dass** die Befestigung der Dichtung (11) an der Montagedose (4) über im Wesentlichen die gesamte Oberfläche der ersteren verteilt ist, insbesondere durch Klebung im Wesentlichen der gesamten Oberfläche oder durch Schweißung längs einem Motiv, das über die gesamte genannte Oberfläche verteilt ist.

11. Verfahren zur Anbringung eines elektrischen Apparates (1) nach irgendeinem der Patentansprüche 1 bis 10, einen Schritt umfassend, der darin besteht, den elektrischen Apparat (1) auf einer Mauer zu positionieren, sowie einen Schritt, der darin besteht, ein durchquerendes Element der Art einer Schraube oder eines Kabels durch einen Durchtrittsbereich (8) bis in die genannte Mauer einzuführen, derart, dass der elektrische Apparat (1) an der genannten Mauer befestigt wird,
Verfahren, **dadurch gekennzeichnet, dass** es einen Schritt umfasst, der darin besteht, die genannte Dichtung (11) auf dem Niveau eines Durchtrittsbereiches (8) zu schneiden, insbesondere bevor der elektrische Apparat (1) positioniert wird, derart, dass in der genannten Dichtung (11) ohne Entfernen von Werkstoff eine Durchtrittsdiskontinuiät geschaffen wird, wie etwa ein einfacher Schlitz oder eine Öffnung geringerer Abmessungen als derer eines durchquerenden Elementes, das durch den genannten Durchtrittsbereich (8) hindurchgeführt werden soll.

12. Verfahren nach Patentanspruch 11, **dadurch gekennzeichnet, dass** das Schneiden der genannten Dichtung (11) während des Einführschrittes mit dem durchquerenden Element erfolgt.

## Claims

1. Electrical appliance (1), designed to be mounted onto the surface of a wall, comprising at least one electric functional block and a mounting box (4) for mounting onto the wall and securing said at least one functional block, said mounting box (4) having, from an inner side of said mounting box (4) relative to a back wall (5), a receiving cavity (6) for said at least one functional block, delimited by said back wall (5),
the mounting box (4) having, on the back wall (5) for passing a traversing element such as a cable or screw through the latter, a plurality of passage areas (8), in particular in the form of an opening hole (10) arranged in said back wall (5) and/or an arrangement of weakened areas for facilitating the creation of such a hole by removing a detachable portion (3),
**characterised in that** the electrical appliance (1) also comprises a single seal (11) fully covering each passage area (8), placed against the back wall (5) from an outer side of the mounting box (4) opposite the inner side around the at least one passage area (8), fixed to the back wall (5) at least in each passage area (8) and able to match with the section of the whole traversing element introduced through the passage area (8) so as to contribute to the sealing of the passage area (8),
and **in that** said seal (11) is fixed to the back wall (5) at least in the area of each passage area (8), at least along a closed contour surrounding the latter,
**in that** said seal (11) covers substantially all of the back wall (5),
and **in that** said seal (11) has, along its outer perimeter and from the side opposite the receiving cavity (6), a continuous rib (12) forming at least one lip.

2. Electrical appliance (1) according to claim 1, **characterised in that** the seal (11) is in the form of a continuous membrane covering all of the said at least one passage area (8), positioned against the back wall (5) of an outer side of the mounting box (4) opposite the inner side, said seal (11) being fixed to the back wall (5) at least along a closed contour surrounding the at least one passage area (8).

3. Electrical appliance (1) according to any of claims 1 or 2, **characterised in that** the continuous rib (12) forms a double lip.

4. Electrical appliance(1) according to any of claims 1 to 3, **characterised in that** the rib (12) is a rib (12), the cross-section of which is a flaring V moving away from the receiving cavity (6) from the back wall (5).

5. Electrical appliance (1) according to any of claims 1 to 4, **characterised in that** the mounting box (4) has at least one secondary cavity (15) into which a fixing element of a cover (14) opens which is designed to close the mounting box (4), the seal (11) not covering a mouth of the said secondary cavity (15) on the back wall (5).

6. Electrical appliance (1) according to any of claims 1 to 5, **characterised in that** the back wall (5) has, from the outer side, a peripheral recess (7) extending along a closed contour.

7. Electrical appliance (1) according to any of claims 1 to 6, **characterised in that** said seal (11) is a piece applied to the mounting box (4), fixed in particular by welding or adhesion.

8. Electrical appliance (1) according to any of claims 1 to 7, **characterised in that** the mounting box (4) has at least one passage area (8) in the form of an opening hole (10), said seal (11) having a flank (13) extending into said opening hole (10) against the inner edge of the latter.

9. Electrical appliance (1) according to any of claims 1 to 8, **characterised in that** it has at least one passage area (8) in the form of a detachable portion (3) to which said seal (11) is not fixed.

10. Electrical appliance (1) according to any of claims 1 to 9, **characterised in that** the attachment of the seal (11) onto the mounting box (4) is distributed over essentially the whole surface of the latter, in particular by adhering substantially all of the surface or by welding along a motif distributed over the whole surface.

11. Method for installing an electrical apparatus (1) according to any of claims 1 to 10, comprising a step consisting of positioning the electrical appliance (1) onto a wall, as well as a step consisting of introducing a traversing element, such as a screw or cable, through a passage area (8) into said wall so as to fix the electrical appliance (1) to said wall,
the method being **characterised in that** it comprises a step consisting of cutting said seal (11) in a passage area (8), in particular before positioning the electrical appliance (1), so as to form in the seal (11) without removing material a discontinuity of passage, such as a simple slot or such as an opening with dimensions smaller than a traversing element to pass through said passage area (8).

12. Method according to claim 11, **characterised in that** said seal (11) is cut by the traversing element during the introduction step.
